# EUROPEAN PATENT APPLICATION

(11) **EP 4 725 286 A1**
(43) Date of publication of application: **15.04.2026**
(21) Application number: 25181789.6
(22) Date of filing: 10.06.2025
(51) Int. Cl.: A01D 34/00, A01D 34/74

(54) **CUTTING ASSEMBLY AND ROBOTIC LAWNMOWER**

(30) Priority: 10.10.2024 SE 2451010
(71) Applicant: Husqvarna AB, 561 82 Huskvarna (SE)
(72) Inventor: Larsson, Svante, 561 82 Huskvarna (SE)

(57) **Abstract**

A cutting assembly (1) for a robotic lawnmower (2) is disclosed. The cutting assembly (1) comprises a cutting arrangement (4), a mounting unit (8), and a mechanism (5) configured to support the cutting arrangement (4) relative to the mounting unit (8) such that the cutting arrangement (4) is movable in directions (d1, d2) towards and away from a ground plane (PL1). The cutting assembly (1) further comprises a first member (m1) attached to the cutting arrangement (4) and a second member (m2) arranged on the mounting unit (8), wherein the first member (m1) is configured to abut against the second member (m2) when the cutting arrangement (4) is at a set cutting height position relative to the mounting unit (8) to prevent further movement of the cutting arrangement (4) in the direction (d1) towards the ground plane (PL1). The cutting arrangement (4) comprises one or more elastic members (7, 7') arranged to bias the cutting arrangement (4) towards the set cutting height position. The present disclosure further relates to a robotic lawnmower (2) comprising a cutting assembly (1).

## Description

### TECHNICAL FIELD

The present disclosure relates to a cutting assembly for a robotic lawnmower. The present disclosure further relates to a robotic lawnmower comprising a cutting assembly.

### BACKGROUND

A robotic lawnmower is a lawnmower capable of cutting grass in areas in an autonomous manner, i.e., in a manner not requiring a direct human intervention. Some robotic lawnmowers require a user to set up a border wire around a lawn that defines the area to be mowed. Such robotic lawnmowers use a sensor to locate the wire and thereby determine the boundary of the area to be trimmed. In addition to the wire, robotic lawnmowers may also comprise other types of positioning units and sensors, for example, sensors for detecting an event, such as a collision with an object within the area. The robotic lawnmower may move in a systematic and/or random pattern to ensure that the area is completely cut. A robotic lawnmower usually comprises one or more batteries and one or more electrically driven cutting units being powered by the one or more batteries. In some cases, the robotic lawnmower uses the wire to locate a recharging dock used to recharge the one or more batteries. Generally, robotic lawnmowers operate unattended within the area in which they operate. Examples of such areas include lawns, gardens, parks, sports fields, golf courses, and similar environments.

One common problem when designing robotic lawnmowers is the cutting result. Ensuring an even and precise trim across the entire area can be difficult due to various factors, including uneven ground, slopes, or obstacles. The ability of the mower to adapt to such terrain plays a role in achieving a smooth and uniform cut. If the cutting arrangement is not capable of adjusting effectively, the result may be inconsistent, leaving some areas undercut or overcut, which reduces the overall efficiency and aesthetic of the mowing process.

Another problem is operational time. Since most robotic lawnmowers rely on battery power, their run time is limited by the capacity of the batteries. Larger lawns or areas with complex layouts may require several recharging cycles to complete a full mowing session, leading to interruptions in operation. This reduces the overall efficiency of the system, as the time spent returning to the recharging dock and recharging itself extends the total time needed to complete the task. Moreover, producing robotic lawnmowers in a cost-efficient manner offers significant advantages. By reducing production costs, manufacturers can create more affordable products, making the technology accessible to a wider range of consumers.

### SUMMARY

It is an object of the present invention to overcome, or at least alleviate, at least some of the above-mentioned problems and drawbacks. The object is achieved by the subject-matter of the appended independent claim(s).

According to a first aspect of the present disclosure, the object is achieved by a cutting assembly for a robotic lawnmower. The cutting assembly comprises a cutting arrangement and a mounting unit, wherein the mounting unit is configured to be mounted to a lawnmower body of the robotic lawnmower such that a vertical direction of the cutting assembly is perpendicular to a ground plane defined by ground engaging members of the robotic lawnmower. The cutting assembly comprises a mechanism configured to support the cutting arrangement relative to the mounting unit such that the cutting arrangement is movable in directions towards and away from the ground plane. Moreover, the cutting assembly comprises a first member attached to the cutting arrangement and a second member arranged on the mounting unit, wherein the first member is configured to abut against the second member when the cutting arrangement is at a set cutting height position relative to the mounting unit to prevent further movement of the cutting arrangement in the direction towards the ground plane. The cutting arrangement comprises one or more elastic members arranged to bias the cutting arrangement towards the set cutting height position.

Since the cutting arrangement is movable in directions towards and away from the ground plane, it can be ensured that the cutting arrangement can follow the contour of a ground surface. Moreover, since the cutting assembly comprises the one or more elastic members arranged to bias the cutting arrangement towards the set cutting height position, it can be ensured that cutting arrangement is biased towards the ground surface, preventing it from jumping over obstacles and ground irregularities, and instead allowing it to more seamlessly follow the contour of the ground. This can provide a better and smoother cutting result.

Furthermore, conditions are provided for a cutting arrangement having a low weight while obtaining a biasing force of the cutting arrangement towards the ground surface. That is, an alternative solution for obtaining a biasing force cutting arrangement in the direction towards the ground surface would be to add weight to the cutting arrangement. However, such an added weight to the cutting arrangement would increase the energy consumption of the robotic lawnmower leading to reduced battery life and shorter operating times. Moreover, added weight to the cutting arrangement may require a more robustly built robotic lawnmower, which could further increase the overall weight and complexity of the design. In addition, it can also make the robotic lawnmower less agile, reducing its ability to navigate complex or uneven terrain. Additionally, the added weight may cause more wear on a lawn, compacting the soil and potentially damaging the grass, particularly in softer or wet conditions.

Thus, due to the one or more elastic members arranged to bias the cutting arrangement towards the set cutting height position, a smooth cutting result can be obtained while ensuring energy efficiency, extending battery life and operating times. Furthermore, conditions are provided for enhanced agility and minimized risk of soil compaction and grass damage.

In addition, a low weight of the cutting assembly can help to reduce the overall weight of a robotic lawnmower, making it easier to handle and operate. Furthermore, reducing the weight also lowers the impact forces during collisions, which facilitates compliance with the robotic standards, making certification easier.

Accordingly, a robotic lawnmower is provided overcoming, or at least alleviating, at least some of the above-mentioned problems and drawbacks. As a result, the above-mentioned object is achieved.

Optionally, the cutting assembly comprises a cutting unit configured to rotate around a rotation axis, and wherein the angle between the rotation axis and the vertical direction of the cutting assembly is less than 20 degrees, or is less than 10 degrees. Thereby, conditions are provided for a smooth cutting result while preventing the cutting arrangement from jumping over obstacles and ground irregularities, and instead allowing it to more seamlessly follow the contour of the ground.

Optionally, the cutting unit comprises a cutting disc and a number of cutting members each pivotally arranged at a periphery of the cutting disc. Thereby, a smooth cutting result can be further ensured. In addition, energy-efficiency of the cutting arrangement can be further ensured.

Optionally, the cutting assembly comprises a skid plate rotatably attached to the cutting arrangement at a location below the cutting unit with respect to the vertical direction of the cutting assembly. Thereby, it can be ensured that the cutting arrangement is allowed to follow the contour of a ground surface, while not damaging or leaving marks on the ground surface. Furthermore, the cutting arrangement can be protected from damage during use of the robotic lawnmower.

Optionally, at least one of the first and second members is formed by a resilient material. Thereby, the cutting assembly is protected against fatigue forces and shock loads during operation. In addition, a quieter cutting assembly is provided.

Optionally, the cutting assembly comprises a cutting height adjustment mechanism configured to adjust the set cutting height position by changing the vertical position of the second member relative to the mounting unit. Thereby, a more user-friendly robotic lawnmower can be provided having conditions for a better and smoother cutting result.

Optionally, the cutting height adjustment mechanism comprises a linear actuator controllable to change the vertical position of the second member relative to the mounting unit. Thereby, conditions are provided for a reliable adjustment of the set cutting height position while allowing the cutting arrangement to be lifted from the set cutting height position. Moreover, a cutting assembly is provided with characteristics suitable for cost-efficient manufacturing and assembly.

Optionally, the linear actuator comprises a screw rotatably arranged relative to the mounting unit around a rotation axis, a motor controllable to rotate the screw around the rotation axis, and a follower portion, and wherein the follower portion is connected to the second member and comprises threads arranged in engaging contact with treads of the screw. Thereby, conditions are provided for a reliable adjustment of the set cutting height position while allowing the cutting arrangement to be lifted from the set cutting height position. Moreover, a cutting assembly is provided with characteristics suitable for cost-efficient manufacturing and assembly.

Optionally, the first member is fork-like and comprises a first and a second arm arranged on either side of the screw. Thereby, conditions are provided for a compact and robust cutting assembly providing a reliable adjustment of the set cutting height position while allowing the cutting arrangement to be lifted from the set cutting height position. Moreover, a cutting assembly is provided with characteristics suitable for cost-efficient manufacturing and assembly.

Optionally, the angle between the rotation axis of the screw and the vertical direction of the cutting assembly is less than 30 degrees, or is less than 20 degrees. Thereby, conditions are provided for a compact cutting assembly providing a reliable adjustment of the set cutting height position.

Optionally, the mechanism is a link arm mechanism comprising a number of link arms each pivotally attached to the mounting unit and to the cutting arrangement around pivot axes. Thereby, conditions are provided for obtaining a large travel distance of the cutting arrangement relative to the mounting unit, and thereby a large cutting height adjustment range, without impairing the structural rigidity of the cutting assembly.

Optionally, each pivot axis is perpendicular to the vertical direction of the cutting assembly. Thereby, improved conditions are provided for a compact and robust cutting assembly in which the cutting height can be adjusted within a large cutting height adjustment range without compromising the structural integrity of the cutting assembly.

Optionally, the link arms of the mechanism are of equal length. Thereby, a cutting assembly is provided in which an orientation angle of the cutting arrangement relative to the mounting unit can be maintained upon movement of the cutting arrangement relative to the mounting unit.

Optionally, the one or more elastic members is/are arranged to bias the cutting arrangement towards the set cutting height position by applying a biasing force between pivot axes of the link arms of the mechanism. Thereby, the biasing force can be applied in a reliable and consistent manner, while maintaining simplicity and structural rigidity of the cutting arrangement.

Optionally, the biasing force is a contracting force. This allows the biasing force to be applied reliably and consistently, while maintaining the simplicity and structural rigidity of the cutting arrangement.

Optionally, at least one elastic member of the one or more elastic members is a coil-spring. Thereby, the biasing force can be applied in a reliable and consistent manner, while maintaining simplicity and structural rigidity of the cutting arrangement. In addition, a cutting assembly is provided having characteristics suitable for cost-efficient manufacturing and assembly.

Optionally, at least one elastic member of the one or more elastic members is a torsion-spring. Thereby, the biasing force can be applied in a reliable and consistent manner, while maintaining simplicity and structural rigidity of the cutting arrangement. In addition, a cutting assembly is provided having characteristics suitable for cost-efficient manufacturing and assembly.

Optionally, the cutting arrangement comprises a motor configured to rotate the cutting unit. Thereby, conditions are provided for a compact robotic lawnmower comprising the cutting assembly.

Optionally, the motor is an electric motor. Thereby, conditions are provided for an environmentally friendly and compact cutting assembly having a high cutting efficiency and low energy consumption.

Optionally, the cutting arrangement comprises a motor mount unit, wherein the motor is arranged inside the motor mount unit, and wherein the first member is attached to the motor mount unit of the cutting arrangement. Thereby, further improved conditions are provided for a compact cutting assembly facilitating ease of assembly in a factory, streamlining production processes, and reducing manufacturing costs, while obtaining a large cutting height adjustment range, without impairing the structural rigidity or the performance of the cutting assembly.

According to a second aspect of the present disclosure, the object is achieved by a robotic lawnmower comprising a cutting assembly according to any one of the preceding claims. Since the robotic lawnmower comprises a cutting assembly according to the first aspect of the present disclosure, a robotic lawnmower is provided overcoming, or at least alleviating, at least some of the above-mentioned problems and drawbacks. As a result, the above-mentioned object is achieved.

It will be appreciated that the various embodiments described for the method are all combinable with the control arrangement as described herein. That is, the control arrangement according to the fourth aspect of the invention may be configured to perform any one of the method steps of the method according to the first aspect of the invention.

Further features of, and advantages with, the present invention will become apparent when studying the appended claims and the following detailed description.

### BRIEF DESCRIPTION OF THE DRAWINGS

Various aspects of the present disclosure, including its particular features and advantages, will be readily understood from the example embodiments discussed in the following detailed description and the accompanying drawings, in which:
Fig. 1 schematically illustrates a robotic lawnmower according to some embodiments of the present disclosure,
Fig. 2 illustrates a first perspective view of a cutting assembly of the robotic lawnmower illustrated in Fig. 1,
Fig. 3 illustrates a second perspective view of the cutting assembly of the robotic lawnmower illustrated in Fig. 1,
Fig. 4 illustrates a first cross section of the cutting assembly of the robotic lawnmower illustrated in Fig. 1,
Fig. 5 illustrates a second cross section of the cutting assembly of the robotic lawnmower illustrated in Fig. 1,
Fig. 6 illustrates a third cross section of the cutting assembly of the robotic lawnmower illustrated in Fig. 1, and
Fig. 7 illustrates a fourth cross section of the cutting assembly of the robotic lawnmower illustrated in Fig. 1.

### DETAILED DESCRIPTION

Aspects of the present disclosure will now be described more fully. Like reference signs refer to like elements throughout. Well-known functions or constructions will not necessarily be described in detail for brevity and/or clarity.

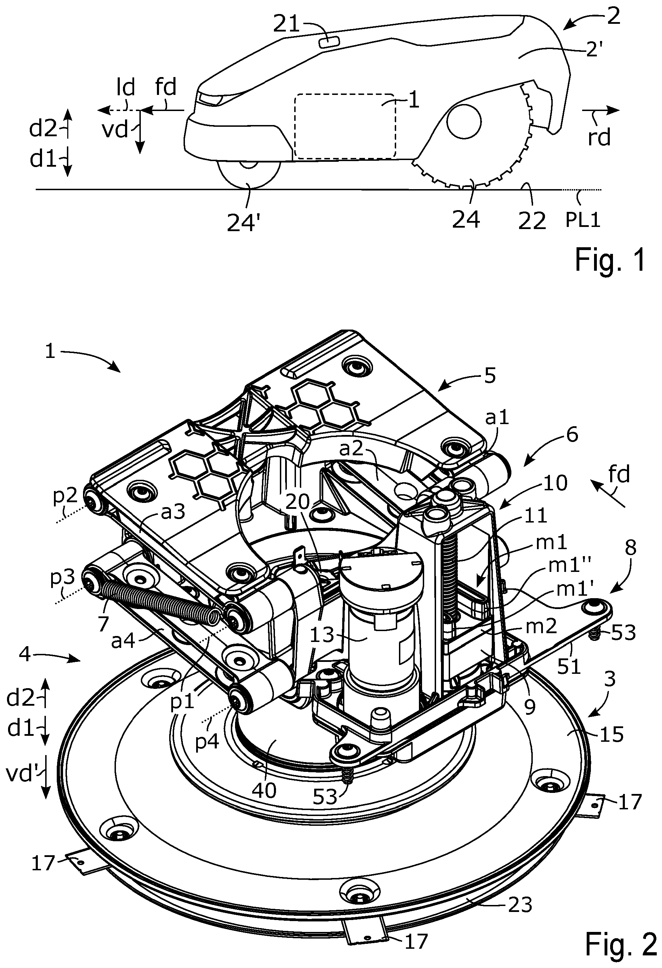

**Fig. 1** schematically illustrates a robotic lawnmower 2 according to some embodiments of the present disclosure. According to the illustrated embodiments, the robotic lawnmower 2 is capable of navigating and cutting grass in an autonomous manner in an area without the intervention or the direct control of a user. The robotic lawnmower 2, as referred to herein, may also be referred to as a self-propelled robotic lawnmower.

According to the embodiments herein, the robotic lawnmower 2 is a small or mid-sized robotic lawnmower 2 configured to be used to cut grass in areas used for aesthetic and recreational purposes, such as gardens, parks, city parks, sports fields, lawns around houses, apartments, commercial buildings, offices, and the like.

The robotic lawnmower 2 comprises a lawnmower body 2' and a number of lawnmower support members 24, 24' each configured to abut against a ground surface 22 during operation of the robotic lawnmower 2 to support the lawnmower body 2'. The lawnmower body 2', as referred to herein, may also be referred to as a lawnmower chassis. The lawnmower support members 24, 24' of the robotic lawnmower 2 define a ground plane PL1. That is, the term ground plane PL1, as used herein, refers to a plane that extends through ground engaging portions of the lawnmower support members 24, 24' of the robotic lawnmower 2. In other words, the ground plane PL1 will extend along a ground surface 22 when the robotic lawnmower 2 is positioned in an intended use position on a flat ground surface 22. In Fig. 1, the robotic lawnmower 2 is schematically illustrates in the intended use position on the ground surface 22.

According to the illustrated embodiments, the lawnmower support members 24, 24' is wheels 24, 24' of the robotic lawnmower 2. According to the illustrated embodiments, the robotic lawnmower 2 comprises four wheels 24, 24', namely two drive wheels 24 and two support wheels 24'. The drive wheels 24 of the robotic lawnmower 2 may each be powered by an electrical motor of the robotic lawnmower 2 to provide motive power and/or steering of the robotic lawnmower 2.

In Fig. 1, a longitudinal direction Id of the robotic lawnmower 2 is indicated. The longitudinal direction Id of the robotic lawnmower 2 is parallel to the ground plane PL1 and thus also to a ground surface 22 when the robotic lawnmower 2 is positioned in the intended use position onto a flat ground surface 22. Moreover, the longitudinal direction Id of the robotic lawnmower 2 is parallel to a forward movement direction fd as well as a reverse movement direction rd of the robotic lawnmower 2.

Moreover, in Fig. 1, a vertical direction vd of the robotic lawnmower 2 is indicated. The vertical direction vd of the robotic lawnmower 2 is perpendicular to each of the forward and reverse movement directions fd, rd of the robotic lawnmower 2 as well as to the longitudinal direction Id of the robotic lawnmower 2. Furthermore, as understood from the above described, the vertical direction vd of the robotic lawnmower 2 is perpendicular to the ground plane PL1 defined by number of lawnmower support members 24, 24' of the robotic lawnmower 2. In addition, the vertical direction vd of the robotic lawnmower 2 coincides with a local gravity vector when the robotic lawnmower 2 is positioned in the intended use position on a flat horizontal support surface.

According to the illustrated embodiments, the drive wheels 24 of the robotic lawnmower 2 are non-steered wheels having a fix rolling direction in relation to the lawnmower body 2'. The respective rolling direction of the drive wheels 24 of the robotic lawnmower 2 is substantially parallel to the longitudinal direction Id of the robotic lawnmower 2. According to the illustrated embodiments, the support wheels 24' are non-driven wheels. Moreover, according to the illustrated embodiments, the support wheels 24' can pivot around a respective pivot axis such that the rolling direction of the respective support wheel 24' can follow a travel direction of the robotic lawnmower 2.

As understood from the above, when the drive wheels 24 of the robotic lawnmower 2 are rotated at the same rotational speed in a forward rotational direction, and no wheel slip is occurring, the robotic lawnmower 2 will move in the forward movement direction fd indicated in Fig. 1. Likewise, when the drive wheels 24 of the robotic lawnmower 2 are rotated at the same rotational speed in a reverse rotational direction, and no wheel slip is occurring, the robotic lawnmower 2 will move in the reverse movement direction rd indicated in Fig. 1. The reverse movement direction rd is opposite to the forward movement direction fd.

According to the illustrated embodiments, the robotic lawnmower 2 may be referred to as a four-wheeled rear wheel driven robotic lawnmower 2. According to further embodiments, the robotic lawnmower 2 may be provided with another number of wheels 24, 24', such as three wheels. Moreover, according to further embodiments, the robotic lawnmower 2 may be provided with another configuration of driven and non-driven wheels, such as a front wheel drive or an all-wheel drive. Moreover, the robotic lawnmower 2 may comprise one or more other types of lawnmower support members than wheels, such as for example an endless track assembly.

According to the illustrated embodiments, the robotic lawnmower 2 comprises a control arrangement 21. The control arrangement 21 may be configured to control propulsion of the robotic lawnmower 2, and steer the robotic lawnmower 2, by controlling electrical motors of the robotic lawnmower 2 arranged to drive the drive wheels 24 of the robotic lawnmower 2. According to further embodiments, the control arrangement 21 may be configured to steer the robotic lawnmower 2 by controlling the angle of steered wheels of the robotic lawnmower 2. According to still further embodiments, the robotic lawnmower may be an articulated robotic lawnmower, wherein the control arrangement 21 may be configured to steer the robotic lawnmower by controlling the angle between frame portions of the articulated robotic lawnmower.

The control arrangement 21 may be configured to control propulsion of the robotic lawnmower 2, and steer the robotic lawnmower 2, so as to navigate the robotic lawnmower 2 in an area to be operated. The robotic lawnmower 2 may further comprise one or more sensors arranged to sense a magnetic field of a wire, and/or one or more positioning units, and/or one or more sensors arranged to detect an impending or ongoing collision event with an object. In addition, the robotic lawnmower 2 may comprise a communication unit connected to the control arrangement 21. The communication unit may be configured to communicate with a remote communication unit to receive instructions therefrom and/or to send information thereto. The communication may be performed wirelessly over a wireless connection such as the internet, or a wireless local area network (WLAN), or a wireless connection for exchanging data over short distances using short-wavelength, i.e. ultra-high frequency (UHF) radio waves in the industrial, scientific, and medical (ISM) band from 2.4 to 2.486 GHz.

The control arrangement 21 may be configured to control propulsion of the robotic lawnmower 2, and steer the robotic lawnmower 2, so as to navigate the robotic lawnmower 2 in a systematic and/or random pattern to ensure that an area is completely covered, using input from one or more of the above described sensors and/or units. Furthermore, the robotic lawnmower 2 may comprise one or more batteries arranged to supply electricity to components of the robotic lawnmower 2. As an example, the one or more batteries may be arranged to supply electricity to electrical motors of the robotic lawnmower 2 by an amount controlled by the control arrangement 21.

Moreover, as schematically indicated in Fig. 1, the robotic lawnmower 2 comprises a cutting assembly 1. As is further explained herein, the cutting assembly 1 is configured to cut vegetation, such as grass.

**Fig. 2** illustrates a first perspective view of the cutting assembly 1 of the robotic lawnmower 2 illustrated in Fig. 1. Below, simultaneous reference is made to Fig. 1 and Fig. 2, if not indicated otherwise.

The cutting assembly 1 comprises a mounting unit 8. In other words, the cutting assembly 1 is configured to be mounted to the lawnmower body 2' of the robotic lawnmower 2 via the mounting unit 8. In more detail, the mounting unit 8 is configured to be mounted to the lawnmower body 2' of the robotic lawnmower 2 such that a vertical direction vd' of the cutting assembly 1 is perpendicular to the ground plane PL1 defined by the ground engaging members 24, 24' of the robotic lawnmower 2. This may also be expressed as that the mounting unit 8 is configured to be mounted to the lawnmower body 2' of the robotic lawnmower 2 such that the vertical direction vd' of the cutting assembly 1 coincides with the vertical direction vd of the robotic lawnmower 2. Thus, according to embodiments herein, the vertical direction vd' of the cutting assembly 1 will coincide with a local gravity vector when the mounting unit 8 of the cutting assembly 1 is mouted to the robotic lawnmower 2 and the robotic lawnmower 2 is positioned in the intended use position on a flat horizontal support surface.

The mounting unit 8 comprises a number of fastening sections 51 configured to be fastened to the lawnmower body 2' using a number of fastening elements 53, such as screws. In Fig. 2, only one fastening section 51 and two fastening elements 53 have been provided with a reference sign for reasons of brevity and clarity.

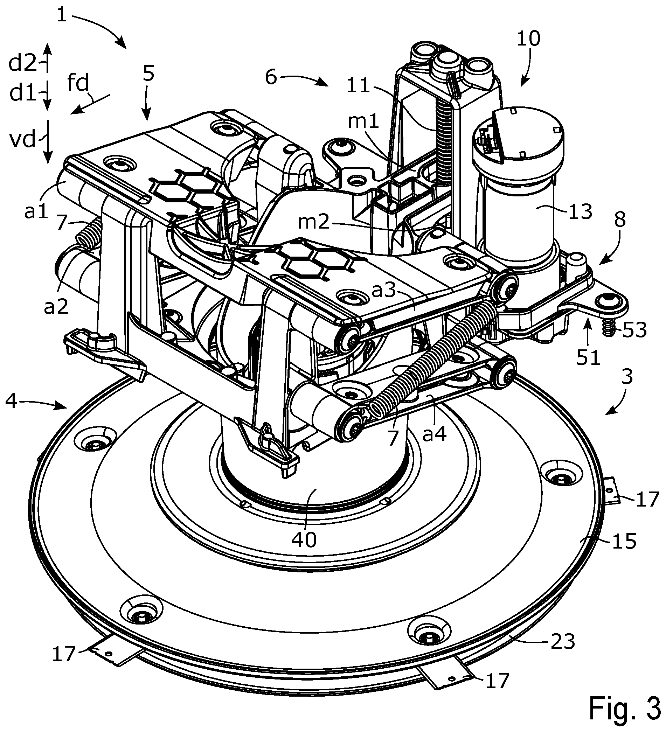

**Fig. 3** illustrates a second perspective view of the cutting assembly 1 of the robotic lawnmower 2 illustrated in Fig. 1. In Fig. 3, one fastening section 51 of the mounting unit 8 and one fastening elements 53 have been provided with reference signs.

As indicated in Fig. 2 and Fig. 3, the cutting assembly 1 comprises a cutting unit 3. According to the illustrated embodiments, the cutting unit 3 comprises a cutting disc 15 and a number of cutting members 17, wherein each of the number of cutting members 17 is pivotally arranged at a periphery of the cutting disc 15. According to further embodiments, the cutting unit 3 may comprise another type of cutting unit, such as a fix cutting arm, or the like.

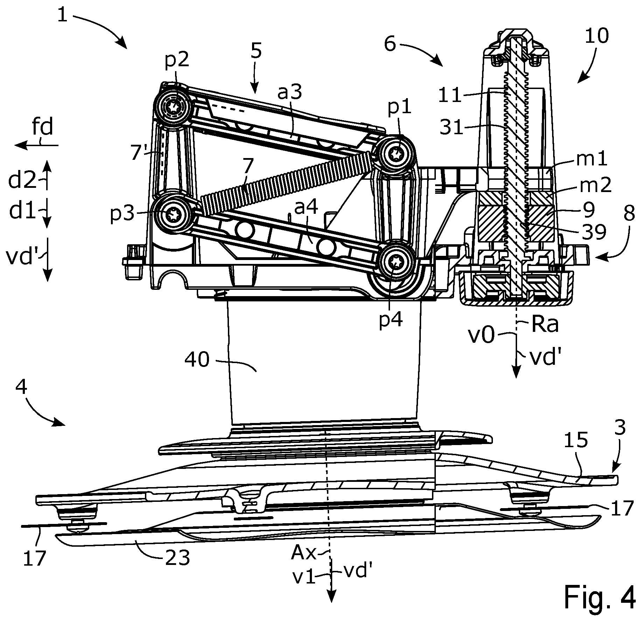

**Fig. 4** illustrates a first cross section of the cutting assembly 1 of the robotic lawnmower 2 illustrated in Fig. 1. In Fig. 4, the cross section is made in a plane parallel to the vertical direction vd' of the robotic lawnmower 2. Below, simultaneous reference is made to Fig. 1 - Fig. 4, if not indicated otherwise.

In Fig. 4, a rotation axis Ax of the cutting unit 3 is indicated. The cross section of Fig. 4 is made in a plane parallel to the rotation axis Ax of the cutting unit 3. As indicated in Fig. 2, the cutting arrangement 4 comprises a motor 20. The motor 20 is configured to rotate the cutting unit 3 around the rotation axis Ax during operation of the robotic lawnmower 2. According to the illustrated embodiments, the motor 20 is an electric motor. In these embodiments, the motor 20 is configured to operate using electricity from one or more batteries of the robotic lawnmower 2. The motor 20 is arranged inside a motor mount unit 40 of the cutting arrangement 4. The motor mount unit 40 is indicated in Fig. 2 - Fig. 4.

According to the illustrated embodiments, the angle v1 between the rotation axis Ax and the vertical direction vd' of the cutting assembly 1 is approximately 3 degrees. According to further embodiments, the angle v1 between the rotation axis Ax and the vertical direction vd' of the cutting assembly 1 may be less than 20 degrees, or may be less than 10 degrees. The angle v1 between the rotation axis Ax and the vertical direction vd' of the cutting assembly 1 is such that a leading portion of the cutting unit 3 is closer to the ground plane PL1 than a trailing portion of the cutting unit 3 with respect to the forward moving direction fd of the robotic lawnmower 2.

The cutting assembly 1 further comprises a skid plate 23. The skid plate 23 is rotatably attached to the cutting arrangement 4 at a location below the cutting unit 3 with respect to the vertical direction vd' of the cutting assembly 1. The skid plate 23 is rotatably attached to the cutting arrangement 4 such that it can rotate around the same rotation axis Ax as the cutting unit 3. However, the skid plate 23 is rotatably attached to the cutting arrangement 4 such that the skid plate 23 is free to rotate relative to the cutting unit 3, i.e., such that it can rotate independently of the cutting unit 3 around the rotation axis Ax. As can be seen in Fig. 2 - Fig. 4, the skid plate 23 is sized such that it covers most of the cutting unit 3 as seen along the rotation axis Ax. However, the number of cutting members 17 protrudes further out from the cutting arrangement 4 than the edge of the skid plate 23.

According to embodiments herein, the cutting assembly 1 comprises a mechanism 5 configured to support the cutting arrangement 4 relative to the mounting unit 8 such that the cutting arrangement 4 is movable in directions d1, d2 towards and away from the ground plane PL1.

According to the illustrated embodiments, the mechanism 5 is a link arm mechanism comprising a number of link arms a1 - a4 each pivotally attached to the mounting unit 8 and to the cutting arrangement 4 around pivot axes p1 - p4. According to the embodiments illustrated in Fig. 2 - Fig. 4, each pivot axis p1 - p4 is perpendicular to the vertical direction vd' of the cutting assembly 1. Moreover, in these embodiments, the link arms a1 - a4 of the mechanism 5 are of equal length. According to further embodiments, the cutting assembly 1 may comprise another type of mechanism configured to support the cutting arrangement 4 relative to the mounting unit 8 such that the cutting arrangement 4 is movable in directions d1, d2 towards and away from the ground plane PL1. An example of such a mechanism is a guide rail assembly.

The cutting assembly 1 comprises a first member m1 attached to the cutting arrangement 4 and a second member m2 arranged on the mounting unit 8. The first member m1 is configured to abut against the second member m2 when the cutting arrangement 4 is at a set cutting height position relative to the mounting unit 8 to prevent further movement of the cutting arrangement 4 in the direction d1 towards the ground plane PL1. In Fig. 2 - Fig. 4, the cutting arrangement 4 is at a set cutting height position relative to the mounting unit 8.

According to the illustrated embodiments, the cutting assembly 1 comprises a cutting height adjustment mechanism 6 configured to adjust the set cutting height position by changing the vertical position of the second member m2 relative to the mounting unit 8. Thus, according to the illustrated embodiments, the set cutting height position is adjustable via the cutting height adjustment mechanism 6. According to further embodiments, the set cutting height position of the cutting arrangement 4 may be adjustable via another type of arrangement or assembly, such as via a manual set screw,k or similar. Furthermore, according to still further embodiments, the set cutting height position of the cutting arrangement 4, as referred to herein, may be a fix, i.e., non-adjustable, cutting height position of the cutting arrangement 4.

In Fig. 2 - Fig. 4, the cutting arrangement 4 is illustrated as positioned in a relatively low set cutting height position meaning that the cutting unit 3 of the cutting arrangement 4 is relatively close to the ground plane PL1.

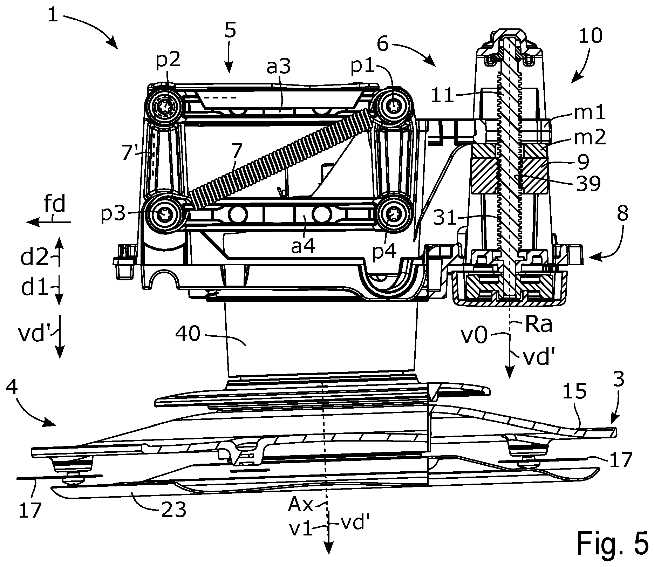

**Fig. 5** illustrates a second cross section of the cutting assembly 1 of the robotic lawnmower 2 illustrated in Fig. 1. In Fig. 5, the cutting height adjustment mechanism 6 has been operated to change the vertical position of the second member m2 relative to the mounting unit 8 to increase the set cutting height position. In other words, the set cutting height position of the cutting arrangement 4 is higher in Fig. 5 as compared to in Fig. 4 meaning that the cutting unit 3 of the cutting arrangement 4 is at a further distance from the ground plane PL1 in Fig. 5 than in Fig. 4.

Below, simultaneous reference is made to Fig. 1 - Fig. 5, if not indicated otherwise. According to the illustrated embodiments, the cutting height adjustment mechanism 6 comprises a linear actuator 10 controllable to change the vertical position of the second member m2 relative to the mounting unit 8. The linear actuator 10 comprises a screw 11 rotatably arranged relative to the mounting unit 8 around a rotation axis Ra, a motor 13 controllable to rotate the screw 11 around the rotation axis Ra, and a follower portion 9. The follower portion 9 is connected to the second member m2 and comprises threads 39 arranged in engaging contact with treads 31 of the screw 11.

According to the illustrated embodiments, the angle v0 between the rotation axis Ra of the screw 11 and the vertical direction vd' of the cutting assembly 1 is zero degrees. In other words, according to the illustrated embodiments, the rotation axis Ra of the screw is parallel to the vertical direction vd' of the cutting assembly 1. However, according to further embodiments, the angle v0 between the rotation axis Ra of the screw 11 and the vertical direction vd' of the cutting assembly 1 may be less than 30 degrees, or may be less than 20 degrees.

As is best seen in Fig. 2 and Fig. 3, according to the illustrated embodiments, the first member m1 is fork-like and comprises a first and a second arm m1', m1" arranged on either side of the screw 11. Moreover, according to the illustrated embodiments, the first member m1 is attached to the motor mount unit 40 of the cutting arrangement 4.

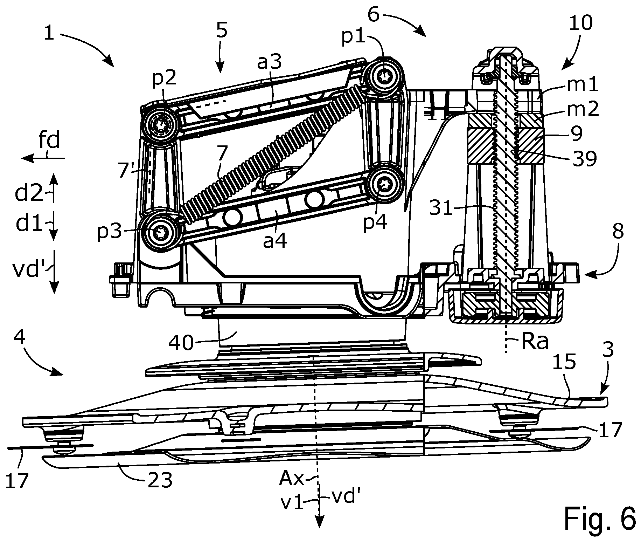

**Fig. 6** illustrates a third cross section of the cutting assembly 1 of the robotic lawnmower 2 illustrated in Fig. 1. In Fig. 6, the cutting height adjustment mechanism 6 has been operated to change the vertical position of the second member m2 relative to the mounting unit 8 to further increase the set cutting height position from the position illustrated in Fig. 5. In other words, the set cutting height position of the cutting arrangement 4 is higher in Fig. 6 as compared to in Fig. 5 meaning that the cutting unit 3 of the cutting arrangement 4 is at a further distance from the ground plane PL1 in Fig. 6 than in Fig. 5.

Below, simultaneous reference is made to Fig. 1 - Fig. 6, if not indicated otherwise. As mentioned, the first member m1 is configured to abut against the second member m2 when the cutting arrangement 4 is at a set cutting height position relative to the mounting unit 8 to prevent further movement of the cutting arrangement 4 in the direction d1 towards the ground plane PL1. The abutting contact between the first and second members m1, m2 allow the cutting arrangement 4 to be lifted from the set cutting height position to a higher position by an external force acting on the cutting arrangement 4.

The external force may for example arise from an abutting contact between the skid plate 23 and a ground surface, for example a protruding part of the ground surface, an undulation thereof, or the like.

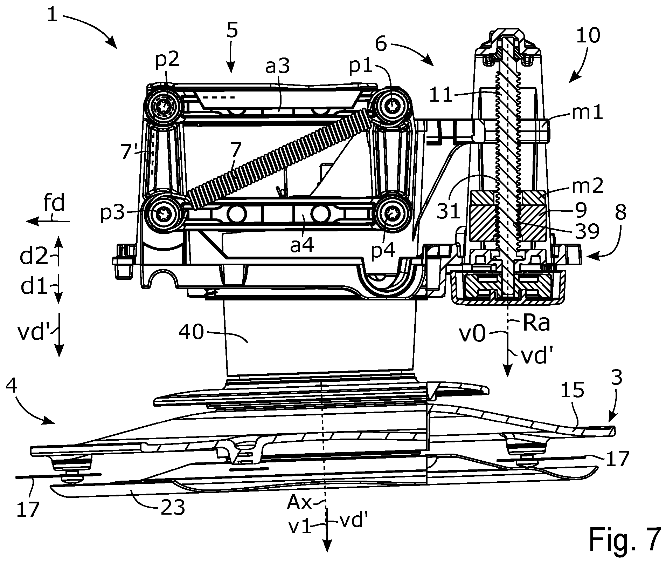

**Fig. 7** illustrates a fourth cross section of the cutting assembly 1 of the robotic lawnmower 2 illustrated in Fig. 1. In Fig. 7, the cutting height adjustment mechanism 6 is in the same setting as depicted in Fig. 4, i.e., a relatively low set cutting height position. In other words, in Fig. 7, the second member m2 is in the same vertical position relative to the mounting unit 8 as depicted in Fig. 4.

However, in Fig. 7, the cutting arrangement 4 has been lifted to a higher position than in Fig. 4 by an external force acting on the cutting arrangement 4 in a direction d2 from the ground plane PL1.

As can be seen in Fig. 2 - Fig. 7, according to embodiments herein, the cutting arrangement 4 comprises one or more elastic members 7, 7' arranged to bias the cutting arrangement 4 in a direction d1 towards the set cutting height position. Below, simultaneous reference is made to Fig. 1 - Fig. 7, if not indicated otherwise.

Since the cutting arrangement 4 is movable in directions d1, d2 towards and away from the ground plane PL1, it can be ensured that the cutting arrangement 4 can follow the contour of a ground surface 22. Moreover, since the cutting assembly 1 comprises the one or more elastic members 7, 7' arranged to bias the cutting arrangement 4 towards the set cutting height position, it can be ensured that cutting arrangement 4 is biased towards the ground surface 22, preventing it from jumping over obstacles and ground irregularities, and instead allowing it to more seamlessly follow the contour of the ground. This can provide a better and smoother cutting result.

Furthermore, conditions are provided for a cutting arrangement 4 having a low weight while obtaining a biasing force of the cutting arrangement 4 towards the ground surface 22. That is, an alternative solution for obtaining a biasing force cutting arrangement 4 in the direction d1 towards the ground surface 22 would be to add weight to the cutting arrangement 4. However, such an added weight to the cutting arrangement 4 would increase the energy consumption of the robotic lawnmower 2 leading to reduced battery life and shorter operating times. Moreover, added weight to the cutting arrangement 4 may require a more robustly built robotic lawnmower 2, which could further increase the overall weight and complexity of the design. In addition, it can also make the robotic lawnmower 2 less agile, reducing its ability to navigate complex or uneven terrain. Additionally, the added weight may cause more wear on a lawn, compacting the soil and potentially damaging the grass, particularly in softer or wet conditions.

Thus, in summary, due to the one or more elastic members 7, 7' arranged to bias the cutting arrangement 4 towards the set cutting height position, a smooth cutting result can be obtained while ensuring energy efficiency, extending battery life and operating times. Furthermore, conditions are provided for enhanced agility and minimized risk of soil compaction and grass damage.

In addition, a low weight of the cutting assembly 1 can help to reduce the overall weight of the robotic lawnmower 2, making it easier to handle and operate. Furthermore, reducing the weight also lowers the impact forces during collisions, which facilitates compliance with the robotic standards, making certification easier.

According to the illustrated embodiments, the one or more elastic members 7, 7' is/are arranged to bias the cutting arrangement 4 towards the set cutting height position by applying a biasing force between pivot axes p1, p3 of the link arms a1 - a4 of the mechanism 5. According to further embodiments, the one or more elastic members 7, 7' may be arranged to bias the cutting arrangement 4 towards the set cutting height position in another manner.

According to the illustrated embodiments, the cutting assembly 1 comprises two elastic members 7 in the form of coil springs. Each of these elastic members 7 is configured to apply a contracting force between pivot axes p1, p3 of the link arms a1 - a4 of the mechanism 5 to thereby bias the cutting arrangement 4 in a direction d1 towards the set cutting height position. According to further embodiments, the cutting assembly 1 may comprise another number of coil springs, such as one.

Moreover, according to the illustrated embodiments, the cutting assembly 1 comprises at least one elastic member 7' in the form of a torsion-spring. The cutting assembly 1 may comprise at least one elastic member 7' in the form of a torsion-spring in addition to one or more coil-springs, or as an alternative to one or more coil-springs.

According to the illustrated embodiments, the mechanism 5 and the one or more elastic members 7, 7' are configured such that the biasing force provided by the one or more elastic members 7, 7' increases with the height of the cutting arrangement 4 above the ground plane PL1. That is, when the cutting arrangement 4 is at a low position, such as in Fig. 4, the one or more elastic members 7, 7' provides a relatively low biasing force onto the cutting arrangement 4 in the direction d1 towards the ground plane PL1, and when the cutting arrangement 4 is at a high position, such as in Fig. 6 and Fig. 7, the one or more elastic members 7, 7' provides a higher biasing force onto the cutting arrangement 4 in the direction d1 towards the ground plane PL1.

In this manner, the one or more elastic members 7, 7' provides a relatively low biasing force onto the cutting arrangement 4 in the direction d1 towards the ground plane PL1 when the set cutting height position is set to a low height setting, such as is depicted in Fig. 4. The skid plate 23 of the cutting arrangement 4 is more likely to strike against a portion of a ground surface 22, or an object thereon, when the cutting height adjustment mechanism 6 is set to a low height setting as compared to when the cutting height adjustment mechanism 6 is set to a higher height setting. Similarly, the skid plate 23 of the cutting arrangement 4 is less likely to strike against a portion of a ground surface 22, or an object thereon, when the cutting height adjustment mechanism 6 is set to a high height setting as compared to when the cutting height adjustment mechanism 6 is set to a lower height setting.

Accordingly, by progressively increasing the biasing force provided by the one or more elastic members 7, 7' with the height of the cutting arrangement 4 above the ground plane PL1, damage of the cutting assembly 1 can be further avoided while ensuring a better and smoother cutting result.

According to the illustrated embodiments, the mechanism 5 and the one or more elastic members 7, 7' are configured such that the one or more elastic members 7, 7' applies the biasing force onto the cutting arrangement 4 in the direction d1 towards the ground plane PL1 in all height settings of the cutting height adjustment mechanism 6 but with a progressively reducing biasing force towards the lowest possible height setting of the cutting height adjustment mechanism 6.

When the external force acting on the cutting arrangement 4 in Fig. 7 is released, the cutting arrangement 4 is moved from the lifted position illustrated in Fig. 7 to the set cutting height position illustrated in Fig. 4 by the biasing force provided by the one or more elastic members 7, 7' and by gravity. An abutting contact is obtained between the first and second members m1, m2 when the cutting arrangement 4 reaches the set cutting height position.

According to the illustrated embodiments, the second member m2 is formed by a resilient material. The resilient material may for example comprise rubber or a rubber-like material. Due to the resilient material of the second member m2, the second member m2 acts as a damper. In this manner, the cutting assembly 1 is protected against fatigue forces and shock loads during operation. In addition, a quieter cutting assembly 1 is provided. According to further embodiments, the first member m1 may, as an alternative, or in addition, be formed by a resilient material, such as rubber or a rubber-like material.

As mentioned, according to the embodiments herein, the robotic lawnmower 2 is a small or mid-sized robotic lawnmower 2 configured to be used to cut grass in areas used for aesthetic and recreational purposes, such as gardens, parks, city parks, sports fields, lawns around houses, apartments, commercial buildings, offices, and the like.

According to some embodiments, the robotic lawnmower 2 comprises two or more cutting assemblies 1 according to embodiments herein, such as 2 - 5 cutting assemblies 1. In such embodiments, each mounting unit 8 of the two or more cutting assemblies 1 is mounted to the lawnmower body 2' of the robotic lawnmower 2 such that a vertical direction vd' of the cutting assembly 1 is perpendicular to a ground plane PL1 defined by ground engaging members 24, 24' of the robotic lawnmower 2. A robotic lawnmower 2 comprising two or more cutting assemblies 1 according to embodiments herein may be regarded as a mid-sized robotic lawnmower 2.

It is to be understood that the foregoing is illustrative of various example embodiments and that the invention is defined only by the appended independent claims. A person skilled in the art will realize that the example embodiments may be modified, and that different features of the example embodiments may be combined to create embodiments other than those described herein, without departing from the scope of the present invention, as defined by the appended independent claims.

As used herein, the term "comprising" or "comprises" is open-ended, and includes one or more stated features, elements, steps, components, or functions but does not preclude the presence or addition of one or more other features, elements, steps, components, functions, or groups thereof.

## Claims

1. A cutting assembly (1) for a robotic lawnmower (2), the cutting assembly (1) comprising a cutting arrangement (4) and a mounting unit (8),
wherein the mounting unit (8) is configured to be mounted to a lawnmower body (2') of the robotic lawnmower (2) such that a vertical direction (vd') of the cutting assembly (1) is perpendicular to a ground plane (PL1) defined by ground engaging members (24, 24') of the robotic lawnmower (2),
wherein the cutting assembly (1) comprises a mechanism (5) configured to support the cutting arrangement (4) relative to the mounting unit (8) such that the cutting arrangement (4) is movable in directions (d1, d2) towards and away from the ground plane (PL1),
wherein the cutting assembly (1) comprises a first member (m1) attached to the cutting arrangement (4) and a second member (m2) arranged on the mounting unit (8),
wherein the first member (m1) is configured to abut against the second member (m2) when the cutting arrangement (4) is at a set cutting height position relative to the mounting unit (8) to prevent further movement of the cutting arrangement (4) in the direction (d1) towards the ground plane (PL1),
and wherein the cutting arrangement (4) comprises one or more elastic members (7, 7') arranged to bias the cutting arrangement (4) towards the set cutting height position.

2. The cutting assembly (1) according to claim 1, wherein the cutting assembly (1) comprises a cutting unit (3) configured to rotate around a rotation axis (Ax), and wherein the angle (v1) between the rotation axis (Ax) and the vertical direction (vd') of the cutting assembly (1) is less than 20 degrees, or is less than 10 degrees.

3. The cutting assembly (1) according to claim 2, wherein the cutting assembly (1) comprises a skid plate (23) rotatably attached to the cutting arrangement (4) at a location below the cutting unit (3) with respect to the vertical direction (vd') of the cutting assembly (1).

4. The cutting assembly (1) according to any one of the preceding claims, wherein at least one of the first and second members (m1, m2) is formed by a resilient material.

5. The cutting assembly (1) according to any one of the preceding claims, wherein the cutting assembly (1) comprises a cutting height adjustment mechanism (6) configured to adjust the set cutting height position by changing the vertical position of the second member (m2) relative to the mounting unit (8).

6. The cutting assembly (1) according to claim 5, wherein the cutting height adjustment mechanism (6) comprises a linear actuator (10) controllable to change the vertical position of the second member (m2) relative to the mounting unit (8).

7. The cutting assembly (1) according to claim 6, wherein the linear actuator (10) comprises a screw (11) rotatably arranged relative to the mounting unit (8) around a rotation axis (Ra), a motor (13) controllable to rotate the screw (11) around the rotation axis (Ra), and a follower portion (9), and wherein the follower portion (9) is connected to the second member (m2) and comprises threads (39) arranged in engaging contact with treads (31) of the screw (11).

8. The cutting assembly (1) according to claim 7, wherein the first member (m1) is fork-like and comprises a first and a second arm (m1', m1") arranged on either side of the screw (11).

9. The cutting assembly (1) according to any one of the preceding claims, wherein the mechanism (5) is a link arm mechanism comprising a number of link arms (a1 - a4) each pivotally attached to the mounting unit (8) and to the cutting arrangement (4) around pivot axes (p1 - p4).

10. The cutting assembly (1) according to claim 9, wherein the one or more elastic members (7, 7') is/are arranged to bias the cutting arrangement (4) towards the set cutting height position by applying a biasing force between pivot axes (p1, p3) of the link arms (a1 - a4) of the mechanism (5).

11. The cutting assembly (1) according to claim 10, wherein the biasing force is a contracting force.

12. The cutting assembly (1) according to any one of the preceding claims, wherein the cutting arrangement (4) comprises a motor (20) configured to rotate the cutting unit (3).

13. The cutting assembly (1) according to claim 12, wherein the motor (20) is an electric motor.

14. The cutting assembly (1) according to any one of the claims 12 or 13, wherein the cutting arrangement (4) comprises a motor mount unit (40), wherein the motor (20) is arranged inside the motor mount unit (40), and wherein the first member (m1) is attached to the motor mount unit (40) of the cutting arrangement (4).

15. A robotic lawnmower (2) comprising a cutting assembly (1) according to any one of the preceding claims.
